# EUROPÄISCHE PATENTANMELDUNG

(11) **EP 0 943 410 A1**
(43) Veröffentlichungstag der Anmeldung: **22.09.1999**
(21) Anmeldenummer: 98104976.0
(22) Anmeldetag: 19.03.1998
(51) Int. Cl.: B29C 45/14

(54) **Einstufiges Verfahren zur Herstellung von Dekorformteilen aus nachwachsenden Rohstoffen**

(71) Anmelder: Wolf, Heinrich, 73230 Kirchheim unter Teck (DE)
(72) Erfinder: Wolf, Heinrich, 73230 Kirchheim unter Teck (DE)
(74) Vertreter: Blum, Rudolf Emil Ernst

(57) **Zusammenfassung**

Gegenstand der Erfindung ist ein einstufiges Verfahren zur Herstellung von Dekorformteilen, welche einen Grundkörper aus einem nachwachsenden natürlichen Rohstoff und ausserdem ein Dekoroberteil aufweisen. Dabei wird das Material aus dem nachwachsendem Naturstoff in eine Form enthaltend das Dekoroberteil hinterspritzt und es entsteht vorzugsweise ein duroplastischer Verbund zwischen beiden Teilen. Ausserdem betrifft die vorliegende Erfindung Dekorformteile, welche gemäss dem erfindungsgemässen Verfahren hergestellt werden und schliesslich die Verwendung von thermoplastischen Naturstoffgranulaten für die Herstellung von Dekorformteilen. Derartige Dekorformteile finden insbesondere Verwendung für die Verschönerung von Ausstattungsgegenstände, wie z.B. bei der Innenaustattung von Fahrzeugen, Möbeln oder Büroausstattungsgegenstände sowie Gebrauchsgegenstände.

## Beschreibung

Die vorliegende Erfindung betrifft ein Verfahren zur Herstellung von Dekorformteilen, welche einen Grundkörper aus einem natürlichen, d.h. nachwachsenden Rohstoff und ausserdem ein Dekoroberteil aufweisen. Ausserdem betrifft die vorliegende Erfindung Dekorformteile, welche gemäss dem erfindungsgemässen Verfahren hergestellt werden und schliesslich noch die Verwendung von thermoplastischen Naturstoffgranulaten für die Herstellung von Dekorformteilen. Derartige Dekorformteile finden insbesondere Verwendung für die Verschönerung von Ausstattungsgegenstände, wie z.B. die Innenausstattung von Fahrzeugen, Möbeln oder Büroausstattungsgegenstände, Gehäuse und für Gebrauchsgegenstände allgemein.

Verkleidungsoberflächen aus synthetischen Kunststoffen erfreuen sich einer derartigen Beliebtheit, dass sie in vielen Bereichen eine faktische Monopolstellung einnehmen. So wird beispielsweise ein beträchtlicher Teil der Innenausstattung von Fahrzeugen, wie beispielsweise die Armaturenbretter, mit Kunststoffteilen ausgelegt. Für höhere ästhetische Ansprüche werden dann beispielsweise beim Automobilinnenausbau Lenkräder, Dekorblenden, Armaturenbretter, Mittelkonsolen und Türverkleidungen mit einer Oberflächenschicht aus hochwertigem Holz, Holzimitat, oder Leder mit hohem Aufwand versehen. Auch in der Möbelindustrie sind furnierte Möbelteile gefragt, wobei auch hier die gegenwärtigen Verfahren zu deren Bereitstellung relativ kostenintensiv sind.

Die Herstellung von Dekorformteilen bestehend aus einem Dekoroberteil und einem Grundkörper ist allerdings gemäss dem Stand der Technik nur in aufwendigen Mehrstufen-Verfahren zu deren Herstellung erhältlich und damit relativ problematisch. Die gegenwärtig gebräuchlichen mehrstufigen Verfahren umfassen unter anderem :
a) Grundkörper aus Massiv- oder Mehrschichtholz, wobei die Form (Geometrie) des Grundkörpers in erster Linie durch mechanische Behandlung erreicht wird. Die Dekorschicht, z.B. edles Maserfurnier, wird als Zuschnitt unter Verwendung von Klebern oder Leime in eine Pressform eingelegt und unter Druck, Temperatur und bei einem gewissen Zeitaufwand mit dem Grundkörper verbunden. Der Kostenaufwand ist durch die vielen Fertigungsstufen und Arbeitsgänge vergleichsweise hoch. Nachteilig ist ausserdem die bedeutende Verletzungsgefahr bei Kraftfahrzeug-Innenteilen bzw. im Kraftfahrzeugbereich allgemein durch die Splittergefahr im Crashfall.
b) Sperrholz-Furnier-Dekorformteil, welches jedoch als Form- oder Schichtsperrholz aus mehreren 0,5-1 mm dicken Lagen im Kreuzverbund hergestellt ist. Die Mindestlagenzahl beträgt 3, für Dekorformteile im Kraftfahrzeugbereich-Innenbereich bis 20 Lagen und mehr. Auch diese Herstellung, welche derjenigen unter a) genannten sehr ähnlich ist, stellt ebenfalls keine befriedigende Lösung dar. Wie beim Verfahren gemäss a) ist das unter b) beschriebene Verfahren mit einem vergleichbar hohen Kostenaufwand verbunden, was insbesondere durch den Einsatz von Furnieren, Alublech zur Verstärkung, sowie Leimfilmzuschnitte, Dekorzuschnitte und Presseinrichtungen un der aufwendigen Verfahrensschritte begründet ist.
c) Thermoplastisches Kunststoff-Spritzgiessverfahren, wobei innerhalb des Arbeitszyklus die synthetische, plastifizierte Spritzgiessmasse in eine entsprechende Form gedrückt wird.
d) Niederdruck-Giessverfahren, wobei im Gegensatz zum Spritzgiessverfahren mehrkomponentige duroplastische Kunstharzmassen unter statischem oder geringem Pressdruck in eine Form appliziert werden.
   Die nach den Verfahren c) und d) hergestellten Grundkörper müssen durch mechanische und/oder chemische Vorbehandlung der Grundkörperoberfläche zur Aufnahme von Dekoroberflächen vorbereitet werden, wobei das Grenzflächenhaftungsvermögen (d.h. der Verbund) zwischen synthetischen und natürlichen Dekoroberflächen vergleichsweise schlecht ist und insbesondere kein duroplastischer Verbund möglich ist. Ein weiterer Arbeitsschritt ist dann das Aufbringen des Furniersubstrats und der zeitgesteuerte Pressvorgang, wobei vorher noch Klebeschichten aufgebracht werden müssen. Diese einzelnen Verfahrensschritte sind nicht nur zeitaufwendig, sondern erfordern eine bestimmte Sorgfalt, was zur Folge hat, dass diese herkömmlichen Verfahren zur Bereitsstellung von Dekorformteilen mit hohen Kosten verbunden sind.
e) Ein direktes Umspritzen bzw. Hinterspritzen eines Furniersubstrates mittels des Grundkörpermaterials bestehend aus den bisher verwendeten synthetischen Materialien. Der grosse Nachteil dieses Verfahrens besteht im Umstand, dass nach dem Abkühlen des letztendlichen Dekorformteils, insbesondere bei klimatischer Beanspruchung, eine Ablösung des Furnierteils von der Grundkörperoberfläche aus Kunststoff stattfindet. Dies hängt damit zusammen, dass die Kunstoffsubstrate als Grundkörper, sowie die Funiermaterialien, beispielsweise aus Holz, völlig unterschiedliche Materialeigenschaften (z.B. Ausdehnungskoeffizienten) aufweisen und so ein kraftschlüssiger Verbund und insbesondere ein im wesentlichen duroplastischer Verbund zwischen dem Grundkörper und dem Dekoroberteil nach dem Abkühlen kaum möglich ist.

Es war folglich eine Aufgabe der vorliegenden Erfindung ein Verfahren bereitzustellen, welches die oben genannten Nachteile nicht aufweist. Eine weitere Aufgabe war es Dekorformkörper bereitzustellen, welche nach einem einfacheren und damit kostengünstigeren Verfahren hergestellt werden können.

Die obigen Aufgaben wurden erfindungsgemäss nach den unabhängigen Ansprüche gelöst.

Völlig überraschend hat sich gezeigt, dass bei der Verwendung eines Grundkörpermaterials, welches im wesentlichen aus thermoplastischen, nachwachsenden Naturrohstoffen besteht, die Nachteile bei der Herstellung von Dekorformteilen wie unter a) bis e) beschrieben, durch das Umspritz- bzw. Hinterspritz-Verfahren vermieden werden können.

Beim erfindungsgemässen Verfahren wird das Dekoroberteil mit seiner Sichtfläche in eine Form eingelegt und mit einem thermoplastischen bzw. duroplastischen Naturstoffmaterial hinter- bzw. umspritzt.

Wie unter e) bereits ausgeführt ist das Um- bzw. Hinterspritzen bei der Verwendung von synthetischen Kunststoffen als Grundkörper nicht möglich, weil durch die verschiedenen Materialeigenschaften bei klimatischer Beanspruchung kein bleibender Verbund zwischen Grundkörper und Dekoroberteil entsteht.

Überraschenderweise ist das einstufige Hinterspritzen mit anschliessendem bleibenden Verbund zwischen Grundkörper und Dekoroberteil genau dann möglich, wenn der Grundkörper aus einem Naturstoffgranulat hergestellt wird. Dies lässt sich wahrscheinlich damit erklären, dass sowohl der Grundkörper als auch das Dekoroberteil ein Naturstoffmaterial darstellt, welche vergleichbare Materialeigenschaften aufweisen, so dass beim Abkühlen nach dem thermoplastischen Spritzgussverfahren keinerlei unterschiedliche Materialveränderungen der beiden Materialien auftreten. Insbesondere Lignin-haltige Naturstoffprodukte sind gut geeignet, weil Lignin ein im Holz enthaltendes natürliches Polymer ist und als Bindemittel beim Spritzvorgang in das Dekoroberteil eindiffundieren kann, wo es für einen thermoplastischen bzw. im wesentlichen duroplastischen Verbund sorgt. Insbesondere dann, wenn das Dekoroberteil Holz enthält oder daraus besteht, wird letztendlich ein ausgezeichneter Verbund erhalten.

Ein weiterer äusserst vorteilhafter Effekt der Verwendung von Naturstoffprodukten liegt bei dem sich ergebenen ökologischen Aspekt.

Gebrauchsgegenstände enthaltend oder bestehend aus nachwachsenden Rohstoffen anstatt synthetischen Kunststoffen geniessen gegenwärtig ein rasant anwachsendes Interesse in der Öffentlichkeit. Dies liegt insbesondere daran, dass die bis jetzt überwiegend eingesetzten synthetischen Kunststoffe ein gravierendes Abfallbeseitigungsproblem darstellen. Auch die Wiederverwertung (Recycling) von synthetischen Kunststoffen ist mit grossen Schwierigkeiten hinsichtlich der Trennung der verschiedenen Kunststoffe und infolgedessen mit erheblichen Kosten verbunden. Schliesslich erhebt sich die grundsätzliche Frage nach der Begrenztheit der Erdölreserven, welche den zugrunde liegenden Rohstoff darstellen und so die Grundlage der Kunststoffsynthese bilden. Insofern sind im Rahmen der vorliegenden Erfindung synthetische Zusätze (z.B. zur Veränderung der Materialfestigkeit, der Farbe, des Geruchs) zum Grundkörpermaterial durchaus zulässig, aber für den Erhalt eines vollständig kompostierbaren Materials keineswegs förderlich.

Bis dato ist eine ganze Reihe von ökologischen, d.h. biologisch abbaubaren bzw. sogar kompostierbaren Materialen bereitgestellt worden, wobei die Materialeigenschaften, mit denen der synthetischen Kunststoffe durchaus vergleichbar sind. Insbesondere Naturpolymere, wie Cellulose, Stärke, Proteine, Lignine etc., die den Vorteil besitzen regenerierbar zu sein, d.h. die beliebig nachwachsen können und auch biologisch abbaubar, bzw. kompostierbar sind, sind für die Naturstoffe und deren Verwendung für die vorliegende Erfindung von Interesse.

Grundsätzlich können alle thermoplastisch verarbeitbare Naturstoffe für die Durchführung des erfindunsgemässen Verfahrens verwendet werden. In einer besonders bevorzugten Ausführungsform wird aber ein in WO 95/08594 beschriebenes Naturstoffgranulat verwendet, welches ganz bemerkenswerte thermoplastische Eigenschaften aufweist und welches kompostierbar, d.h. zu praktisch 100% biologisch abbaubar ist. Das besagte Naturstoff-Granulat wird durch Umsetzung von Alkali-Lignin, Protein-Derivaten, Essigsäure sowie gegebenenfalls Naturfasern bei Temperaturen von etwa 120°C im Rahmen einer stereochemische Modifikationsreaktion aus einem Extrudiervorgang erhalten.

In einer bevorzugten Ausführungsform werden beim erfindungsgemässen Hinterspritz-Verfahren, d.h. beim Einsatz des thermoplastischen Naturstoff-Granulats zur Herstellung von Dekorformteilen, Temperaturen von 100 bis 180°C, vorzugsweise zwischen 120 bis 160°C angewendet. Im Fall der Verwendung des Naturstoffgranulats von WO 95/08594 wird üblicherweise eine Temperatur von ungefähr 150°C eingehalten.

Ein wesentlicher Faktor beim erfindungsgemässen Verfahren ist der Druck, mit welchem das Naturstoff-Grundmaterial, vorzugsweise aus einer Spritzgiessmaschine, ausgespritzt wird. Der Druck bestimmt das Ausmass mit welchem die Bindemittel-Komponenten des Naturstoff-Grundkörpermaterials in das Dekormaterial eindiffundieren können und so einen thermoplastischen oder im wesentlichen duroplastischen Verbund erzeugen. Der im Rahmen der vorliegenden Erfindung verwendete Druck beträgt üblicherweise zwischen 500 und 2000 bar, wobei der bevorzugte Bereich etwa 1000 bis 1600 bar beträgt. Ganz besonders bevorzugt sind 1400 bis 1600 bar.

In einer besonders bevorzugten Ausführungsform der Erfindung wird ein im wesentlichen duroplastischer Verbund zwischen dem Grundkörper und dem Dekoroberteil angestrebt. Dabei sollte sich das Naturstoff-Ausgangsmaterial zur Herstellung des Grundkörpers durchaus thermoplastisch verhalten, da es ansonsten gar nicht als Granulat zu einem Grundkörper verarbeitbar wäre. Deshalb werden vorzugsweise die Spritzparameter (Druck, Temperatur) so gewählt, dass nach dem Hinterspritzvorgang ein im wesentlichen duroplastischer Verbund zwischen Grundkörper und dem Dekoroberteil entsteht, weil eine Änderung der Verbundsqualität in Abhängigkeit einer Temperaturänderung unerwünscht ist. Für extrem hohe Gebrauchsanforderungen wird durch vorgängige Beschichtung der Innenseite des Dekoroberteils mit einem Leim erreicht, dass nach dem Spritzzyklus, d.h. beim Auskühlen und Nachhärten ein im wesentlichen duroplastischer Verbund resultiert.

An das Dekoroberteil werden keinerlei besonderen Anforderungen gestellt. Besonders bevorzugt ist allerdings ein Dekoroberteil enthaltend Naturstoffe, insbesondere Naturstoffe enthaltend oder bestehend Holz, Holzimitat, Leder und/oder Papier. Insbesondere bei Dekoroberteilen aus Holz oder Holzimitat kann es für die Formgebung notwendig sein, eine vorgängige Einweichung mittels heissem Wasserdampf durchzuführen. Damit kann der Wasseranteil im Furniermaterial bis zu 20 Gew.-% betragen. Der Wassergehalt im Furnier stört aber den Ablauf des Verfahrens und die Ausbildung eines thermoplastischen bzw. eines im wesentlichen duroplastischen Verbunds nicht.

Bezüglich der Dicke des Dekoroberteils ist zu beachten, dass bei zu grosser Dicke auf eine exakte Vorverformung zu achten ist, während bei einer zu geringen Dicke des Dekoroberteil das heisse, mit hohem Druck einspritzende Grundkörpermaterial das besagte Dekoroberteil über seine Poren geradezu durchdringen (durchschlagen) kann. Erfahrungsgemäss wird eine Dicke des Dekoroberteil von 0,3 bis 1,2 mm, vorzugsweise von 0,4 bis 0,8 mm verwendet.

Ein weiterer Gegenstand der vorliegenden Erfindung ist ein Dekorformteil, welches aus einem Verfahren erhältlich ist, bei welchem ein Dekoroberteil und ein Naturstoff-Grundkörper so zu einem Verbund gebracht werden, dass das Dekoroberteil mit seiner Sichtfläche in eine Form eingelegt wird, auf der Gegenseite des Dekoroberteils ein Metalleinleger oder ähnliches zur späteren Montage, versehen mit mechanischen Halterungen oder Verbindungselementen, mit einem thermoplastischen bzw. duroplastischen Naturstoffmaterial hinter- bzw. kraftschlüssig umspritzt wird.

Schliesslich ist die Verwendung eines Naturstoffgranulats erhältlich aus Lignin bzw. Lignin-Derivaten, Proteinen bzw. Protein-Derivaten, einer oder mehrerer organischen Säuren sowie gegebenenfalls Naturfasern, vorzugsweise eine Kombination aus natürlichen Kurz- und Langfasertypen, ein letzter Aspekt der vorliegenden Erfindung.

In einer besonders bevorzugten Ausführungsform wird dabei eine Naturstoff-Granulat verwendet, welches im Rahmen einer stereochemischen Modifikationsreaktion eines Alkali-Lignin/Casein-Gemisches mit Hilfe einer organischen Säure (z.B. Essigsäure) und eine Kombination aus natürlichen Kurz- und Langfasern (beispielsweise Hanf- und/oder Schilfgrasfasern) als Füllmittel entsteht. Die dabei auftretenden Temperaturen betragen etwa 120°C.

Im folgenden soll die vorliegende Erfindung anhand von 2 Beispielen näher verdeutlicht werden, wobei dadurch der Schutzbereich nicht als eingeschränkt angesehen werden soll.

### Beispiel 1 (Herstellung eines Naturstoff-Granulats)

In einer Zwangsmischanlage werden 50 kg Naturfasern, 2 kg Casein und 3 kg Essigsäure vermischt und einer 120 Sekunden langen Zeitreaktion unterworfen innerhalb derselben die Komponenten eine stereochemische Modifikation durchlaufen. Anschliesend werden 28 Kg Alkali-Lignin, 16 kg eines Alkoholgemisches und als Fliesshilfsmittel 1 kg Gleitmittel zugegeben und weitere 240 Sekunden intensiv vermischt wobei die weiteren Komponenten ebenfalls eine stereochemische Modifikation durchlaufen. Das so vorkonfektionierte Naturstoff-Konglomerat wird anschliessend in die Öffnung eines Extruders gegeben und bei einer Temperatur von etwa +125°C zur Schmelze gebracht. Anschliessend wird mit einem Druck von etwa 180 bar die Schmelze aus einer Austrittsdüse in Form eines Strangs herausgepresst, der nach Konditionierung mittels einer mechanischen Zerkleinerungsmaschine zum Naturstoff-Granulat weiterverarbeitet wird. Das vorliegende Naturstoff-Granulat wird anschliessend in einem thermoplastischen Spritzgussverfahren zu den erfindungsgemässen Dekorformteilen weiterverarbeitet.

### Beispiel 2 - Herstellung von Halbschalen zur Ummantelung von metallischen Lenkrad-Skeletten

In einem Formwerkzeug wird ein durch heissen Dampf formbar gemachtes 0,5 mm dickes Dekoroberteil mit der Sichtseite nach aussen eingelegt. Anschliessend wird das auf etwa 150°C aufgeschmolzene Naturstoffgranulat aus Beispiel 1 mittels einer Thermoplast-Spritzgiessmaschine in das Formwerkzeug mit einem Druck von etwa 1500 bar gegen das eingelegte Dekoroberteil gespritzt. Im Zuge der chemischen Nachreaktion wird ein kraftschlüssiger Verbund zwischen Dekoroberteil und Grundkörper in einem Arbeitsgang erreicht. Da das Formwerkzeug eine Ober- und eine Unterschale enthält, werden mit einem Arbeitsgang 2 Dekorformteile gespritzt, die nach dem Aushärten formbündig um das Lenkradskelett mittels Leim zusammengefügt werden.

Die gleichen oder ähnliche Vorgehensweisen werden für andere Dekorformteile angewendet, wobei natürlich die entsprechenden Formwerkzeuge verwendet werden müssen.

Die so letztendlich erhaltenen Dekorformteile werden anschliessend einer Lackierung unterzogen, damit die Sichtflächen der Dekoroberteile den gewünschten Gebrauchswert und optischen Glanz erhalten.

## Patentansprüche

1. Einstufiges Verfahren zur Herstellung von Dekorformteilen bestehend aus einem Dekoroberteil und einem Naturstoff-Grundkörper, dadurch gekennzeichnet, dass das Dekoroberteil mit seiner Sichtfläche in eine Form eingelegt wird und mit einem thermoplastischen Naturstoffmaterial hinterspritzt wird, und so ein kraftschlüssiger Verbund zwischen dem Grundkörper und dem Dekoroberteil entsteht.

2. Verfahren nach Anspruch 1, dadurch gekennzeichnet, dass das Dekoroberteil einen Naturstoff enthält oder daraus besteht, insbesondere aus Naturstoffen ausgewählt aus der Gruppe umfassend Holz, Holzimitat, Leder und Papier.

3. Verfahren nach einem der Ansprüche 1 oder 2, dadurch gekennzeichnet, dass ein Naturstoffgranulat, erhältlich aus einer Umsetzung von Lignin bzw. Lignin-Derivaten sowie Proteinen bzw. Protein-Derivaten, organischen Säuren sowie gegebenenfalls Naturfasern, zum Hinterspritzen verwendet wird.

4. Verfahren nach einem der Ansprüche 1 bis 3, dadurch gekennzeichnet, dass die Spritzgiess-Temperaturen zwischen etwa 100 bis 180°C, vorzugsweise zwischen 120 bis 150°C, ganz besonders bevorzugt 150°C betragen.

5. Verfahren nach einem der Ansprüche 1 bis 3, dadurch gekennzeichnet, dass das Dekoroberteil eine Dicke von 0,3 bis 1,2 mm aufweist, vorzugsweise von 0,4 bis 0,8 mm.

6. Verfahren nach einem der Ansprüche 1 bis 5, dadurch gekennzeichnet, dass vor dem Hinterspritzen des Dekoroberteils mit dem thermoplastischen bzw. duroplastischen Naturstoffmaterial eine Leimschicht auf der Innenseite des Dekoroberteils appliziert wird.

7. Dekorformteil erhältlich nach dem Verfahren gemäss einem der Ansprüche 1 bis 6.

8. Dekorformteil gemäss Anspruch 7, dadurch gekennzeichnet, dass es ein Lenkrad, eine Dekorblende, ein Armaturenbrett, eine Mittelkonsole, eine Türblende, ein Möbelzierteil, ein Ausstattungs- oder Gebrauchsgegenstand ist.

9. Dekorformteil gemäss einem der Ansprüche 7 oder 8, dadurch gekennzeichnet, dass zwischen dem Naturstoff-Grundkörper und den Dekoroberteil ein im wesentlichen duroplastischer Verbund besteht.

10. Verwendung eines Naturstoffgranulats erhältlich aus Lignin bzw. Lignin-Derivaten, insbesondere Alkali-Lignin, Proteinen bzw. Protein-Derivaten, insbesondere aus Casein, einer oder meherer organischen Säuren, insbesondere mit Essigsäure sowie gegebenenfalls einer Kombination aus nachwachsenden Lang- und/oder Kurzfasern, insbesondere Schilf- und/oder Hanfgras zur Herstellung eines Dekorformteils gemäss einem der Ansprüche 7 bis 9.
